# EUROPÄISCHE PATENTSCHRIFT

(11) **EP 0 410 477 B1**
(45) Veröffentlichungstag und Bekanntmachung des Hinweises auf die Patenterteilung: **02.03.1994**
(21) Anmeldenummer: 90114474.1
(22) Anmeldetag: 27.07.1990
(51) Int. Cl.: F16F 1/12, E05F 1/16

(54) **Federanschlusseinrichtung**
Connecting device for springs
Dispositif de connexion pour des ressorts

(30) Priorität: 27.07.1989 DE 3924947
(43) Veröffentlichungstag der Anmeldung: 30.01.1991
(73) Patentinhaber: HÖRMANN KG AMSHAUSEN, D-33803 Steinhagen (DE)
(72) Erfinder: Hörmann, Michael, Dipl.Ing., D-4834 Marienfeld (DE)
(74) Vertreter: Flügel, Otto, Dipl.-Ing.

(56) Entgegenhaltungen:
- EP-A- 0 171 797
- DE-A- 3 722 304
- DE-C- 503 791
- US-A- 4 811 455

## Beschreibung

Die Erfindung bezieht sich auf eine Zugfedereinrichtung mit den Merkmalen des Oberbegriffes des Ansprüches 1.

Bekannte Zugfedereinrichtungen dieser Art - DE-OS 37 13 501, DE-OS 37 22 304 - arbeiten mit parallel angeordnetem und beaufschlagten Schraubenzugfedern anstelle einer einzigen, entsprechend stärker bemessenen Feder herkömmlicher Bauart, so daß die Gefahr eines Gesamtausfalls der Bezugfedereinrichtung durch Federbruch entsprechend herabgemindert und zumindest nicht schlagartig auftreten kann, weil ein gleichzeitiger Bruch sämtlicher parallel geschalteten schwächeren Federn ausgeschlossen werden kann. Die mehreren parallel angeordneten und belasteten Schraubenzugfedern, deren Einzelbelastung einen der Anzahl der parallelen Federn entsprechenden Bruchteil der von der Zugfedereinrichtung als Ganzes aufzunehmenden Last beträgt, lassen sich entsprechend einfach und raumsparend herstellen. Die parallel angeordneten Schraubenzugfedern sind - vorzugsweise an ihren beiden Enden - jeweils an ein gemeinsames Federanschlußelement angeschlossen, an welchem eine der Anzahl der parallelen Schraubenzugfedern entsprechende Zahl von Eingreifkörpern ausgebildet ist, auf welchem die diesem Federanschlußelement zugewandten stirnseitigen Endbereiche der einzelnen Federn derart aufgeschoben sind, darf ein Paar von Vorsprüngen in den beiden Seitenkantenbereichen des jeweiligen Eingreifkörpers eine der letzten Wendel des stirnseitigen Endbereiches der jeweils angeschlossenen Feder derart hintergreift, daß ein abziehen der Feder von dem Eingreifkörper verhindert ist. Im Zuge des Aufschiebens des Federendbereiches auf dem jeweiligen Eingreifkörper wird somit eine federelastische Aufweitung der letzten Wendel des Federendbereiches ausgeführt, wenn die letzten Wendel über die Vorsprünge hinweggeschoben werden. Die in ihre ursprüngliche Form zurück federnden Wendel kehren in ihre Lage zurück, so daß der vorgeschaltete Hintergriff eine Halterung der Feder auch unter der höchstmöglichen Betriebszugbelastung der Feder zuverlässig erhalten bleibt.

Nach diesem Stand der Technik lässt sich eine schwächere Schraubenzugfeder aus dünnerem Wendeldreht auf einen Eingreifkörper aufschieben, dessen Vorsprünge in Achsrichtung gesehen nur um eine halbe Wendelsteigung gegeneinander versetzt sind. Es wird dabei von Schraubenzugfedern ausgegangen, deren Wendel im ungedehnten Zustand der Feder aneinander liegen, insoweit also einen geschlossenen Zylindermantel bilden. Dabei können die Vorsprünge zwischen zwei Wendel eingreifen, in dem sie die Wendel an dieser Stelle von den anderen durch entsprechende Längsausdehnung der Feder trennen. Bei Verwendung einer Schraubenzugfeder desselben Innendurchmessers mit deutlich dickeren Wendeldraht bereitet eine Dehnung in Längsrichtung der Feder größere Schwierigkeiten. Es wird daher vorgesehen, die beiden Vorsprünge an den einander gegenüberliegenden Seitenbereichen des jeweiligen Eingreifkörpers in Längsrichtung der angeschlossenen Schraubenzugfeder um mehr als die halbe Wendelsteigung, beispielsweise ein mehrfaches der Wendelsteigung, in Schraubenfederlängsrichtung gegeneinander versetzt anzuordnen. Im Bereich der Längeren der beiden Seitenbereiche ist dabei eine insbesondere trapezförmige Aussparung vorgesehen, die es erlaubt, einen an dem Eingreifkörper festzulegenden Wendelabschnitt einer starken, aus entsprechend dickerem Federdraht bestehenden Schraubenfeder aufzunehmen, die derart durch Verformung über die Biegegrenze hinaus vorgedehnt ist, daß in diesem Vordehnungsbereich eine Wendelsteigung besteht, die das entsprechend Mehrfache der übrigen, im ungespannten Zustand aneinanderliegenden Wendel aufweist. Die Einzelheiten der Ausbildung und Festlegung einer solchen Feder des zugehörigen Eingreifkörpers sind in der DE-OS 37 22 304 ausführlich beschrieben, worauf hier Bezug genommen wird.

Die Befestigung der jeweiligen Endbereiche der Schraubenzugfedern an den zugehörigen Eingreifkörpern bzw. dem die mehreren Eingreifkörper aufweisenden Federanschlußelement ist derart getroffen, daß bei Bruch einer Feder die an den jeweils zugehörigen Eingreifkörpern angeordneten Federendbereiche sich aus dieser Halterung nicht entfernen können. Damit ist auch im Falle eines Federbruches dafür gesorgt, daß keine Federteile abgeschleudert werden.

Ein besonderer Vorteil dieser Zugfedereinrichtung besteht noch darin, daß es nicht mehr erforderlich ist, an dem Schraubenfederkörper der einzelnen Federn durch entsprechende Abbiegung der letzten Wendel einer Anschlußöse auszuformen. Man kann vielmehr die fortlaufend gewickelte Feder einfach durchtrennen und dem jeweils abgetrennten Abschnitt ohne weitere Bearbeitung verwenden. Darüber hinaus erfasst man durch den Vorsprung-Eingriff die Feder jeweils innenseitig an zwei schräg einander gegenüberliegenden Stellen und verteilt somit die in die einzelne Feder eingeleiteten Kräfte entsprechend.

Die Ausführungsbeispiele des vorstehend abgehandelten Standes der Technik zeigen plattenförmige Anschlußelemente, an denen jeweils für den gemeinsamen Anschluß dreier Schraubenzugfedern entsprechend drei Eingreifkörper angeordnet sind, die aus der Platte abgekröpft ausgeformt sind und sich mit ihrer flächigen Gestalt parallel zur Plattenebene des Anschlußelementes erstrecken. Die an die Anschlußstelle - als Beispiel ein Metallband mit einer Längsreihe von Einghängeöffnungen - vorgesehene Verbindungsausbildung ist in Form eines Einhängehakens aus der Platte des Anschlußelementes teilausgestanzt und aus der Plattenebene rechtwinklig herausgebogen.

Es ist Aufgabe der Erfindung, eine Zugfedereinrichtung der eingangs genannten Art zur Verfügung zu stellen, deren Schraubenzugfedern auch in größerer Anzahl hinsichtlich der einzelnen Federlasten gebündelt und etwa symmetrisch in die Anschlußstelle eingeleitet werden können.

Ausgehend von einer Federeinrichtung mit den Merkmalen des Oberbegriffes des Ansprüches 1 wird diese Aufgabe erfindungsgemäß durch dessen kennzeichnenden Merkmale gelöst.

Die erfindungsgemäß ausgebildete Zugfedereinrichtung zeichnet sich dadurch aus, daß das die Eingreifkörper aufweisende und deren Belastung zusammenfassende Federanschlußelement einen in Federzugrichtung gesehen bogen- und/oder polygonförmig ringartig in sich geschlossen ausgebildeten Tragbereich aufweist, dessen die Ringform schließenden Endabschnitte zumindest bereichsweise in Parallellage zueinander zusammengefasst sind, und daß die Verbindungsausbildung im Bereich der parallellagigen Endabschnitte ausgeformt ist und/oder zwei in einem einlagigem Teil des Tragbereiches voneinander beabstandet ausgeformte Einzelausbildungen aufweist.

Im Vordergrund steht dabei die Verbindungsausbildung, die im Bereich der parallellagigen Endabschnitte ausgeformt ist, einem doppellagigen Teil also, daß somit die zweifache Wandstärke des ringförmigen Tragbereiches aufweist und entsprechend hohe Zugkräfte in eine Anschlußstelle einleiten kann, die einen entsprechend klein bemessenen Kraftübertragungsbereich mit der vorzugsweise hakenförmigen Verbindungsausbildung aufweist. Hier ist beispielsweise und im Rahmen einer bevorzugten Anwendung daran gedacht, die Zugfedereinrichtug bei einem Garagentor mit einem einblattigen, über Kopf bewegbaren Torblatt einzusetzen, daß in jeweiligen seitlichen Mittelbereich eine vorragend angeordnete Gelenkachse einer Hebelführungseinrichtung aufweist, an welcher Achse ein Metallband angeschlossen ist, daß eine in seiner Längsrichtung verlaufende Lochreihe aufweist. In eines der Löcher dieser Lochreihe - je nach erforderlicher Gewichtsausgleichs-Federzugspannung wählbar - wird die hakenförmige Verbindungsausbildung der Zugfedereinrichtung eingehängt. Die gebündelte Zugkraft der Federn wirkt somit über die Verbindungsausbildung auf den unteren Randbereich dieses Lochbandes. Bei einem solchen Tor ist das dem Lochband abgewandte Federende im unteren Bereich der jeweiligen Seitenzarge an einem dort fest und abragend angeordneten, stegförmigen Ausleger befestigt, zu welchem Zwecke die Verbindungsausbildung aus zwei an einem einlagigen Teil des Tragbereiches voneinander beabstandet ausgeformten Einzelausbildungen, insbesondere in Form von Abbiegungen hakenförmiger Art, bestehen kann. Auch hier wird die gesamte Zugkraft der gebündelten Federn über eine Verbindungsausbildung in die Zarge eingeleitet, die zweimal die Wandstärke des Tragbereiches umfasst. Diese als Abbiegungen ausgebildeten Einzelausbildungen können im übrigen dem Fingereingriff bei der Handhabung der Zugfedereinrichtung im Zuge der Montage dienen, dann also, wenn die hakenförmige Verbindungsausbildung im doppellagigen Bereich der Endabschnitte des Tragbereiches in eines der Löcher des Lochbandes eingehängt werden soll.

Die Verbindungsausbildung ist insbesonders derart angeordnet, daß sie zumindest in Nähe der resultierenden Lastachse der Zugbelastungen der Einzelfedern liegt. Für den Fall das sämtliche einzelnen Schraubenzufedern gleich stark sind, ergibt sich insoweit auch eine geometrisch zumindest spiegelsymetrische Anordnug der Federn bzw. der Eingreifkörper je nach Ringform des Tragbereiches. Die parallel aneinanderliegenden Endabschnitte des Tragbereiches erstrecken sich in dieser Form in das Innere der von dem Tragbereich beschriebene, in Zugfederrichtung gesehenen Ringform.

In bevorzugter Ausführung weist der Tragbereich des Federanschlußelementes einen in sich geschlossenen Ringabschnitt und einen daran anschließenden, in Gegenrichtung zu den Greifkörpern abstehend ausgebildeten Halsabschnitt auf, in welchem zumindest ein Teilabschnitt der parallellagig zusammengefassten Endabschnitte angeordnet ist, der sich bevorzugt bis in den den Eingreifkörpern gegeüberliegenden Endbereich des Halsabschnittes erstreckt und - vor allem dort - der Ausformung der doppellagigen Verbindungsausbildung dient. An einem solchen Halsabschnitt können auch die Einzelausbildungen der Verbindungsausbildung bzw. die Abbiegungen für den Fingereingriff bei der Handhabung der Zugfedereinrichtung ausgebildet sein.

Die Ausformung der Eingreifkörper sowie das Anbringen der Endstirnbereiche der jeweils zugeordneten Schraubenzugfedern kann so erfolgen, wie dies in den beiden eingangs genannten Druckschriften des Standes der Technik der Fall ist. Es können also sowohl mit aneinanderanliegenden Wendeln ausgebildete Endabschnitte solcher Federn auf Eingreifkörper aufgeschoben werden, die an ihren ansonsten parallel zur Federzugrichtung verlaufenden Seitenflanken lediglich ein oder mehrere Paare von insbesondere um eine halbe Wendeldicke versetzten Vorsprüngen aufweisen, die vorzugsweise in Einsteckrichtung gesehen in Schrägen auslaufen, die den Eingreifkörper in dieser Richtung zunehmend verjüngen. Es können aber auch Eingreifkörper vorgesehen sein, die neben den Vorsprüngen an einer ihrer Längsseiten mit einer Ausnehmung versehen sind, die dem Anbringen eines Federendbereiches dienen, welcher durch eine Federbelastung über die Biegegrenze hinaus von dem übrigen Federkörper getrennt ausgebildet ist. Dabei erfolgt die bleibende Verformung der Feder in Federzugrichtung, so daß zwischen dem übrigen Federkörper und dem Wendelrestabschnitt ein Wendelverlauf größerer Steigung entsteht. Hinsichtlich der Einzelheiten darf auf diesen Stand der Technik verwiesen werden. Wichtig ist in jedem Falle, daß das Aufschieben der Endbereiche einer Mehrzahl von Schraubenzugfedern auf eine entsprechende Anzahl von Eingreifkörper möglich ist, die alle an ein und demselben Federanschlußelement ausgeformt sind. Ein solches Vorgehen wäre spätesten bei beidendiger Halterung mehrerer solcher Schraubenzugfedern an jeweils einem gemeinsamen Federanschlußelement praktisch nicht möglich, wenn die Endbereiche der Federn auf die jeweils zugeordneten Eingreifkörper im Sinne einer Drehbewegung aufgeschraubt oder aber durch Aufwickeln des Federdrahtes auf diese Eingreifkörper gebildet werden müßten. In weiterer Ausgestaltung werden die Endbereiche der an ein Federanschlußelement anzuschließenden Schraubenzugfedern auf die jeweils zugeordneten Eingreifkörper aufgeschoben und dann hinsichtlich des die Vorsprünge übergreifenden Wendelrestabschnittes einer Verformung mit radial zum Wendelverlauf gerichteten Kraftkomponenten unterworfen, so daß dieser Wendelrestabschnitt auch nach Beendigung des Verformungsvorganges einen bleibenden engeren Wendeldurchmesser aufweist, wobei die Wendellänge in Achsrichtung entsprechend wächst. Aufgrund dieses engeren Durchmessers liegt der Wendelrestabschnitt mit seinen dem übrigen Wendelbereich der Schraubenzugfeder zugewandten Endwendel an den Vorsprüngen abgestützt an, so daß sich die Schraubenzugfeder nicht mehr von dem Eingreifkörper abziehen läßt. Um ein Aufschieben zu erleichtern, ist dabei der Wendeldurchmesser des übrigen Schraubenzugfederkörpers zu dessen axiale Mitte hin mit einem Innendurchmesser ausgebildet, der gleich dem oder größer als der größte, senkrecht zur Zugfederrichtung gesehene Abstand zwischen den die anliegende Wendel des Wendelrestabschnittes abstützenden Paar von Vorsprüngen ist.

Diese und weitere bevorzugte Ausführungen der Erfindung ergeben sich aus den Unteransprüchen.

Die Erfindung wird anhand der in der Zeichnung wiedergegebenen Ausführungsbeispiele nachstehend näher erläutet. Es zeigen
- Figur 1: eine Teilseitenansicht des Ringabschnittes eines Tragbereiches eines Federanschlußelementes mit daran angeformten, Endbereiche von Schraubenzugfedern aufnehmenden Eingreifkörpern einer ersten Ausführungsform;
- Figur 2: eine Teilschnittseitenansicht eines Ringabschnittes eines Tragbereiches eines Federanschlußelementes mit Endbereiche von Schraubenfedern aufnehmenden Eingreifkörpern einer zweiten Ausführungsform;
- Figur 3: eine Draufsicht auf das Federanschlußelement gemäß Figur 1 unter Weglassen der Schraubenzugfedern,
- Figur 4: eine Breitseiten-Gesamtansicht des Federanschlußelementes nach dem Beispiel der Figuren 1 und 3, daß auch für das Beispiel gemäß Figur 2 mit anderer Ausformung der Eingreifkörper Gültigkeit hat;
- Figur 5: eine Schmalseitenansicht des Federanschlußelementes gemäß Figur 4;
- Figur 6: einen Schnitt nach der Linie VI-VI in Figur 4;
- Figur 7: eine Seitenansicht auf einen zusätzlich anschließbaren Eingreifkörper mit einem geschnitten wiedergegebenen, auf diesen aufgesetzten Endbereich einer Schraubenzugfeder mit in Längsrichtung vorgedehntem Wendelabschnitt;
- Figur 8: eine Seitenansicht auf einen Eingreifkörper entsprechend Figur 7 mit einem geschnitten wiedergegebenen Endbereich einer Schraubenzugfeder mit geschlossenem Wendelverlauf;
- Figur 9: einen Schnitt nach der Linie IX-IX in Figur 7;
- Figur 10: eine Teilseitenansicht eines Ringabschnittes eines Federanschlußelementes für den lösbaren Anschluß eines zusätzlichen Eingreifkörpers nach den Figuren 7 bis 9;
- Figur 11: eine Teilseitenansicht gemäß Figur 10 mit in der Einführlage befindlichem Eingreifkörper nach den Figuren 7 bis 9.

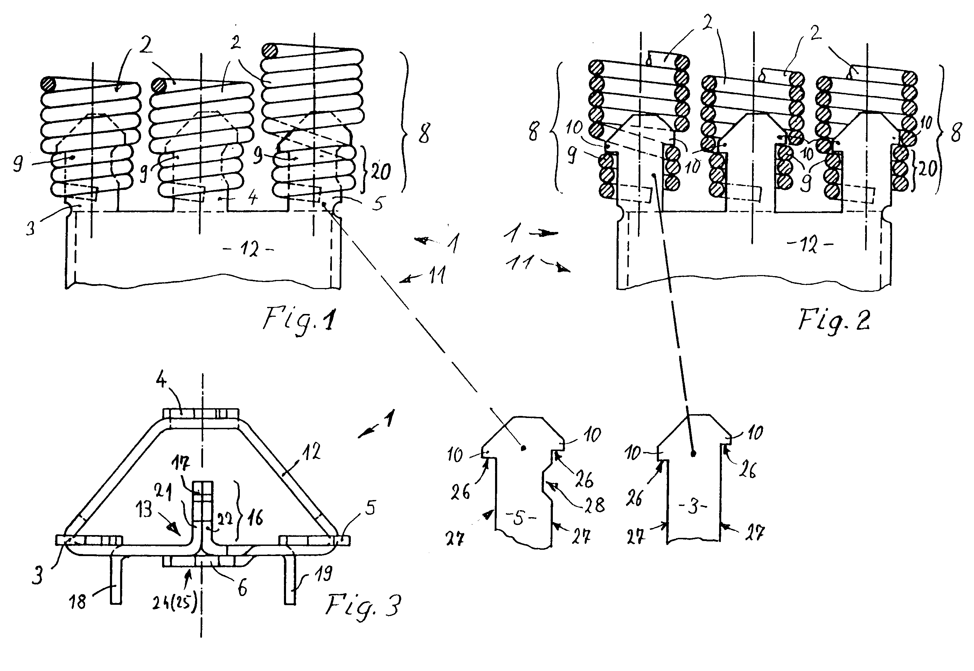

Die Figuren 1 bis 6 zeigen Ausführungsbeispiele eines insgesamt mit 1 bezeichneten Federanschlußelementes einer Zugfedereinrichtung, an der - wie in den Figuren 1 und 2 angedeutet - jeweils mehrere Schraubenzugfedern 2 angeordnet sind, die somit parallel belastet werden. Für den Anschluß der Schraubenzugfedern sind an dem Federanschlußelement 1 jeweils eine Reihe von Vorsprüngen 3 bis 6 ausgeformt, die in Zugkraftrichtung der jeweils anzuschließenden Schraubenzugfeder 2 einseitig parallel abragen und auf die jeweils ein stirnseitiger Endbereich 8 einer Schraubenzugfeder 2 aufgesetzt ist, wie dies die Figuren 1 und 2 erkennen lassen. In diesem aufgesetzten Zustand der Endbereiche 8 der Schraubenzugfedern 2 hintergreift eine 9 der letzten Wendel ein Paar von Vorsprüngen 10, deren jeder in entgegengesetzter Richtung von einer der Seitenkanten des jeweiligen Vorsprunges abragend ausgebildet ist. Dieses Hintergreifen der Wendel 9 des Endbereiches 8 der Schraubenzugfedern 2 kann so bewerkstelligt werden, wie dies in den Deutschen Offenlegungsschriften 37 13 501 und 37 22 304 offenbart ist, also durch mehr oder weniger einfaches Aufschieben je nach Starrheit der verwendeten Schraubenzugfeder ohne oder mit axialer Vordehnung unter Bildung einer an die Wendel 9 in Richtung der Längsmitte der jeweiligen Feder anschließenden Wendel bleibend größerer Steigung. Die Seitenansicht gemäß Figur 1 und die Teilschnittansicht gemäß Figur 2 lassen erkennen, daß an unterschiedlich geformten Eingreifkörpern - einmal mit beidseits glatten Seitenrändern 27 und zum anderen mit einer Aussparung 28 in einem der beiden Seitenränder 27 - unterschiedliche Federn angeschlossen werden können, nämlich zum einen mit axialer bleibender Vordehnung einer Wendel oder eines Wendelbereiches und zum anderen ohne eine solche Vordehnung. Dabei kann der Durchmesser der Schraubenfeder auch im Endbereich etwa gleichmäßig verlaufen und das Hintergreifen der Vorsprünge 10 der Eingreifkörper 3 bis 6 dadurch geschehen, daß der Endbereich 8 der jeweiligen Schraubenzugfeder 2 unter radialer Aufdehnung der die Vorsprünge passierenden Wendel vorübergehend, d.h. elastisch, verformt wird, worauf hin der Wendelrestabschnitt 20 sich wieder auf den ursprünglichen Wendeldruchmesser zurück verformt, so daß die Wendel 9 an den Vorsprüngen 10 bzw. deren Halteschultern 26 anliegt und damit die Feder in ihrer Zugrichtung an den Vorsprüngen 10 abgestützt ist. Die Beispiele nach den Figuren 1 und 2 sollen verdeutlichen, daß die axiale Vordehnung eines Endbereiches 8 nicht unbedingt an einen Eingreifkörper mit seitlicher Aussparung gebunden ist und umgekehrt. Damit soll angedeutet werden, daß an unterschiedlich ausgeformte Eingreifkörper Federn unterschiedlicher Ausgestaltung bzw. Federcharakterristik oder Wendeldrahtstärke angeschlossen werden können. Damit ergibt sich die Möglichkeit einer feinen Abstimmung der Gesamt- Federkernlinie der Einrichtung.

Im Rahmen der gezeigten Beispiele sind die Schraubenzugfedern 2 zunächst mit durchgehend gleichem Wendelinnendurchmesser ausgebildet, der gleich oder etwas größer als der Abstand zwischen den nach außen gerichtet weitesten Ausdehnungen der Vorsprünge 10 eines Paares senkrecht zur Zugkraftrichtung bzw. Abragerichtung der Vorsprünge gesehen ist. Damit lassen sich die stirnseitigen Endbereiche 8 der Schraubenzugfedern 2 ohne Kraftaufwand und ohne die Notwendigkeit von Einführschrägen im Kopfbereich der Eingreifkörper auf diese aufschieben, wenn die gezeigten Einführschrägen der Eingreifkörper das Aufschieben der stirnseitigen Endbereiche der Federn auch erleichtern mögen. Die nach dem Aufschieben die Vorsprünge 10 überragenden Wendel des sogenannten Wendelendabschnittes 20 werden sodann unter bleibender Verformung, d.h. Belastung über die Biegestreckgrenze hinaus, mit radialer Kraftkomponente in Achsrichtung gepresst, so daß die Wendel dieses Bereiches die Seitenkanten des zugehörigen Eingreifkörpers umgreifen und die dem übrigen Federkörper zugewandte Wendel 9 dieses Restbereiches in Federzugrichtung an den Vorsprüngen des Eingreifkörpers abgestützt anliegt.

Das Federanschlußelement nach den Ausführungsbeispielen in den Figuren 1 bis 6 ist aus einen Metallblech hergestellt, welches aus der Blechebene heraus zu einer ringarigen Form zusammengeführt ist, wobei die Ringform durch geradlinige Abschnitte zusammengesetzt oder aber bogenförmig bzw gemischt bogenförmig und geradlinig verlaufen kann. In Umfangsrichtung dieser Ringform sind verteilt Eingreifkörper abgekröpft ausgeformt, die in Richtung der Zugfederlast abragen; Die Ringform ergibt sich aus der Blickrichtung in Richtung der Federlast, wie dies insbesondere Figur 3 erkennen läßt. Die bei diesem Ausführungsbeispiel gewählte Ringform umschreibt ein Trapez, welches im Mittelbereich seiner langen Grundlinie über parallel geführte Endbereiche zu der Ringform zusammengefasst ist.

Das Federanschlußelement 1 besteht aus einem die Ringform umfassenden Tragbereich 11 und den daran ausgeformten Eingreifkörpern 3 bis 6. Im Rahmen der vorliegenden Ausführungsbeispiele setzt sich dieser Tragbereich 11 aus einem Ringabschnitt 12 und einem einstückig daran ausgeformten Halsabschnitt 13 zusammen. Der Ringabschnitt 12 beschreibt die eigentliche in sich geschlossene Ringform, während der Halsabschnitt 13 von dieser in Gegenrichtung der Eingreifkörper abstehend ausgebildet ist. Das zunächst ebenflächige Metallteil, daß zu der Ringform gebogen wird, greift mit seinen die Ringform schließenden Endabschnitten 14 und 15 in Parallellage aneinander an, und zwar derart, daß dieser Anlagebereich etwa in der Längsmitte des Halsabschnittes vorgesehen ist, der Halsabschnitt also selbst durch diese Endabschnitte mitgebildet wird. Zumindest im Bereich des Halsbaschnittes 13 sind die Randabschnitte 14 und 15 dabei in gleicher Richtung auf den Achsmittelbereich der Ringform zustrebend aus dem übrigen Blechverlauf des Halsabschnittes 13 parallel zueinander abgebogen, so daß sich zwei parallel zusammengefasste Stege 21 und 22 ergeben, in denen die Endabschnitte 14 und 15 in Parallellage 16 zueinander verlaufen. In diesem Bereich ist an dem den Eingreifkörpern abgewandten Ende des Halsabschnittes eine hakenförmige Verbindungsausbildung 17 ausgeformt, in der somit die beiden Stege 21, 22 parallelliegend eine zur Dicke des gebogenen Bleches doppelte Wandstärke zur Verfügung stellen, die über den Einhängehaken 17 auf eine nicht dargestellte Anschlußstelle kraftübertragend wirkt. Die Eingreifkörper sind vom Ringverlauf des Ringabschnittes abgekröpft abgebogen und weisen somit die einfache Wandstärke des gebogenen Blechteiles auf, so auch der Großteil des Ringabschnittes 12 und die Wandung des Halsabschnittes 13 außerhalb der Stege 21 und 22 und damit des Einhängehakens 17. Die von den einzelnen Eingreifkörpern über den Ringabschnitt zusammengefasst auf den Halsabschnitt übertragenen Zugkräfte der Einzelfedern, die damit im Halsabschnitt aufsummiert auftreten, werden über den mit doppelter Wandstärke ausgebildeten Einhängehaken entsprechend stabil auf die Anschlußstelle des Tores oder dergleichen übertragen.

In den seitlichen Endbereichen des Halsabschnittes 13 sind durch Abbiegungen 18 und 19 zwei weitere Einhängeausbildungen ausgeformt, in die sich die in den Halsabschnitt eingeleiteten Federzugkräfte ebenfalls verteilen und die dem Anschluß an eine stegförmige Anschlußstelle beispielsweise im unteren seitlichen Zargenbereich eines Tores dienen können. Man kann aber diese Ausbildungen bzw. Abbiegungen 18 und 19 auch als Handhabungsausbildungen ansehen, an denen eine die Zugfedereinrichtung anbringende Hand angreifen kann, um den Einhängehaken 17 beispielsweise in ein Loch eines mit einer Reihe von Löchern ausgeführten Anschlußbandes einhängen zu können.

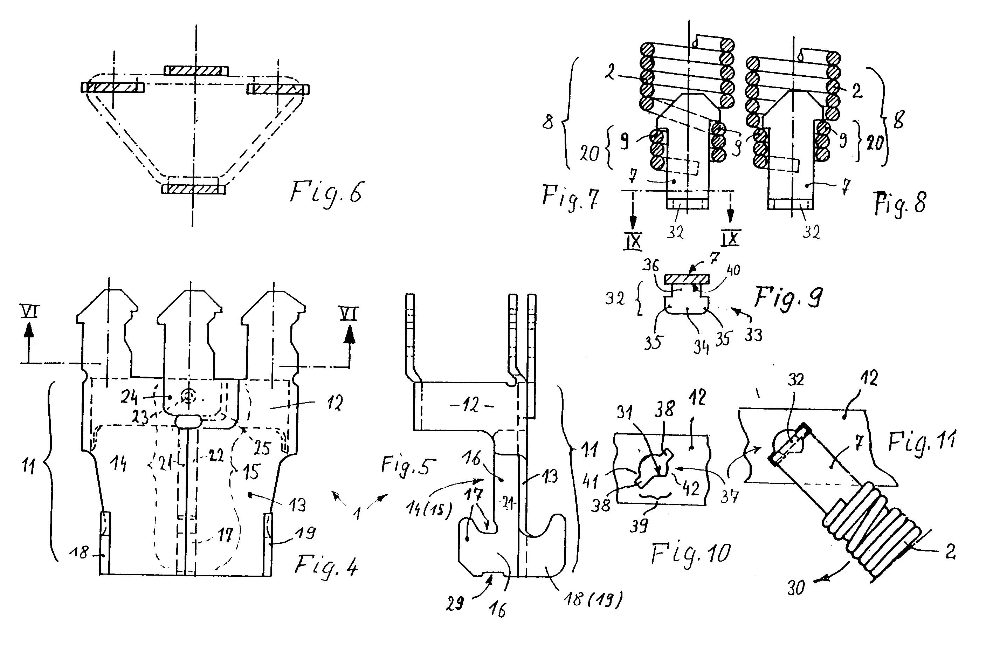

Die sich in Umfangsrichtung an den Ringverlauf des Ringabschnittes 12 anschließenden Teilbereiche 24 und 25 der beiden die Ringform schließenden Endabschnitte können sich aus entgegengesetzten Richtungen kommend überlappen, ohne aus der Umlaufbahn des Ringabschnittes 19 wesentlich herausgebogen zu werden. Zumindest kann an dem einen Endbereich 24 einer der Eingreifkörper 6 ausgebildet sein. Sofern ein weiterer Teilbereich 25 des anderen Endabschnittes 15 vorgesehen ist, liegt dieser parallel von außen her gesehen hinter dem Teilbereich 24 mit dem Eingreifkörper 6. In diesem Bereich können beide Teilbereiche 24 und 25 beispielsweise mit Hilfe einer Durchdrückung 23 oder dergleichen Verbindungselement gegenseitig fixiert sein und damit die Ringform stabilisierten. Wie aus Figur 5 ersichtlich, ist der Einhängehaken 17 an seiner der Hakenauskehlung gegeüberliegenden Seite mit einer Mulde 29 versehen, die dazu dient, den Einhängehaken 17 und damit das zugehörige Federanschlußelement 1 auch bei völligem Federbruch daran zu hindern, aus einem Eingriff mit der Anschlußstelle, beispielsweise einem Loch einer Lochreihe eines Federanschlußbandes, außer Eingriff zu geraten.

In den Figuren 7 bis 11 ist ein Eingreifkörper 7 dargestellt, der auswechselbar bzw. zusätzlich an ein Federanschlußelement der vorgeschilderten Art angebracht werden kann. Wie die Figuren 7 und 8 im Querschnitt zeigen, können auch hier Schraubenzugfedern 2 unterschiedlicher Wendelführung Verwendung finden. Es gilt dasselbe, wie im Zusammenhang mit den Figuren 1 und 2 insoweit erläutert. Dieser Eingreifkörper 7 ist an seinem dem Einführende in den Endbereich 8 der jeweils zugehörigen Schraubenzugfeder 2 ab gewandten Ende nicht einstückig an einen Ringabschnitt 12 angeschlossen, sondern mit einem insgesamt mit 32 bezeichneten Einhängeanker versehen, der aus einer senkrecht zum eigentlichen Breitseitenverlauf des Eingreifkörpers 7 abgebogen ausgebildeten Abkröpfung 33 besteht, die an ihrem abragenden Randbereich 34 mit seitlich abstehenden Auslegern 35 sowie einem zwischen diesem Randbereich und der Wandung des Eingreifkörpers 7 verlaufenden, etwas schmaleren Halsteil 36 besteht, wie dies aus Figur 9 entnehmbar ist. Figur 10 zeigt einen Teilwandungsbereich des Ringabschnittes 12, in welchem eine insgesamt mit 37 bezeichnete Einhängeöffnung ausgebildet ist. Diese Einhängeöffnung umfasst einen schräg zur Umfangsrichtung - beispielsweise 45° - verlaufenden Einführschlitz 38 sowie einen insgesamt mit 39 bezeichneten Öffnungsbereich, der in Umfangsrichtung des Ringabschnittes 12 gesehen die Längenausdehnung der Breite des Halsteils 36 des Einhängeankers 32 umfasst.

Wie aus Figur 11 sersichtlich, kann ein Eingreifkörper 7 für den zusätzlichen Anschluß an einen Ringabschnitt 12 des Federanschlußelementes 1 derart mit diesem verbunden werden, daß die Abkröpfung 33 mit ihrem Randabschnitt 34 voran durch den Einführschlitz 38 hindurchgeführt wird, bis die an die Abkröpfung 33 anschließende Fläche 40 des Eingreifkörpers 7 an der Außenfläche des Ringabschnittes 12 anliegt. Diese Situation ist in Figur 11 wiedergegeben. Wird danach der Eingreifkörper 7, an den eine Schraubenzugfeder 2 in vorbeschriebener Weise bzw. durch Aufschieben unter radialer elastischer Dehnung gehalten ist, in Richtung des Pfeiles 30 von Figur 11 verschwenkt, so hintergreifen die Ausleger 35 der Abkröpfung 33 die sich an die Endabschnitte des Einführschlitzes 38 anschließenden Randbereiche 41 und 42 der Einhängeöffnung 37, so daß der Eingreifkörper 7 nach Art eines Bajonettverschlusses mit dem Ringabschnitt 12 verbunden ist. Der Halsteil 36 liegt dabei an einem Randabschnitt 31 der Einhängeöffnung 37 an, welcher Randabschnitt in Figur 10 verdeutlicht ist. Auf diese Weise lassen sich eine oder mehrere Eingreifkörper auswechselbar an dem Federanschlußelement festlegen, insbesondere im Sinne einer Auswechselbarkeit einer Feder oder aber insbesondere einer Justierung der Gesamtfederkraft durch Ändern der Art und/oder Anzahl der Einzelfedern.

## Patentansprüche

1. Zugfedereinrichtung, insbesondere als Gewichtausgleichsvorrichtung für ein über Kopf bewegbares Torblatt, mit mehreren Schraubenzugfedern (2), die in Parallelanordnung beidendig zwischen mit Zuglast zu beaufschlagenden Anschlußstellen zu befestigen sind, und mit wenigstens einem Federanschlußelement (1), an welchem mehrere etwa in Längsrichtung der Schraubenzugfedern (2) abragende Eingreifkörper (3 bis 7) vorgesehen sind, deren jeder stirnseitig in einen Endbereich (8) einer Schraubenzugfeder (2) eingreift und mit randseitig einander etwa gegenüberliegend ausgebildeten Vorsprüngen (10) eine innerhalb dieses Endbereiches (8) gelegene Schraubenfederwendel (9) in Zugrichtung abstützend hintergreift, und an welchem eine an einer der Anschlußstellen festzulegende Verbindungsausbildung (17), insbesondere in Gestalt eines Einhängehakens ausgeformt ist, wobei das Federanschlußelement (1) mit den, bevorzugt abgekröpft ausgeformten, Eingreifskörpern (3 bis 6) und der Verbindungsausbildung (17) durch Biegen aus einem flächigen Blechteil gebildet ist,
**dadurch gekennzeichnet**,
daß das Federanschlußelement (1) einen in Federzugrichtung gesehen bogen- und/oder polygonförmig ringartig in sich geschlossen ausgebildeten Tragbereich (11) aufweist, dessen sich die an die Ringform (12) anschließenden Endabschnitte (14,15) zumindest bereichsweise in Parallellage zueinander zusammengefasst sind, und daß die Verbindungsausbildung (17 bzw. 18, 19) im Bereich der parallellagigen Endabschnitte (Stegbereiche 21, 22) ausgeformt ist und/oder zwei in einem einlagigen Teil des Tragbereiches (11) voneinander beabstandet ausgeformte Einzelausbildungen (Abbiegungen 18, 19) aufweist.

2. Zugfedereinrichtung nach Anspruch 1,
**dadurch gekennzeichnet**,
daß der Tragbereich (11) des Federanschlußelementes (1) die in Federzugrichtung gesehene Querschnittsgestalt eines Kreises, Quadrates, Rechteckes, Dreieckes oder anderen Vieleckes, insbesondere Trapezes (12), auch mit bogenförmig verlaufenden Eckübergängen oder gemischt bogen- und geradlinigen Abschnitten aufweist.

3. Zugfedereinrichtung nach Anspruch 1 oder 2,
**dadurch gekennzeichnet**,
daß der Tragbereich (11) des Federanschlußelementes (1) einen in sich geschlossenen Ringabschnitt (12) und einen daran anschließenden, in Gegenrichtung zu den Eingreifkörpern (3 bis 7) abstehend ausgebildeten Halsabschnitt (13) aufweist, in welchem zumindest ein Teilabschnitt (Stegbereiche 21, 22) der parallellagig zusammengefassten Endabschnitte (14, 15) angeordnet ist, der sich vorzugsweise bis in den den Eingreifkörpern (3 bis 7) gegenüberliegenden Endbereich des Halsabschnittes (13) erstreckt und, insbesondere dort, die doppellagige Verbindungsausbildung (17) beinhaltet.

4. Zugfedereinrichtung nach einem der Ansprüche 1 bis 3,
**dadurch gekennzeichnet**,
daß der Tragbereich (11) des Federanschlußelementes (1) einen in sich geschlossenen Ringabschnitt (12) und einen daran anschließenden, in Gegenrichtung der Eingreifkörper (3 bis 7) abstehend ausgebildeten Halsabschnitt (13) aufweist, in dessen beiden - bevorzugt etwa parallel zur Federzugrichtung verlaufenden - Seitenbereichen, insbesondere in deren den Eingreifkörpern (3 bis 7) abgewandten Endbereichen, jeweils eine Einhänge-Abbiegung (18 bzw. 19) vorgesehen ist, welche Abbiegungen (18, 19) etwa spiegelsymetrisch zu einer durch die resultierende Federlastachse der Schraubenzugfedern (2) gelegten Ebene voneinander beabstandet angeordnet und/oder ausgebildet sind.

5. Zugfedereinrichtung nach einem der Ansprüche 1 bis 4,
**dadurch gekennzeichnet**,
daß die Verbindungsausbildung (17) im Bereich der parallellagig zusammengefassten (Stegbereiche 21, 22) Endabschnitte (14, 15), insbesondere in Gestalt eines Einhängehakens, hinsichtlich ihres Angriffes an einer aufzunehmenden Anschlußstelle in oder in Nähe der resultierenden Zugfederlastachse der Schraubenzugfedern (2) angeordnet ist.

6. Zugfedereinrichtung nach einem der Ansprüche 1 bis 5,
**dadurch gekennzeichnet**,
daß einer (6) der Eingreifkörper (3 bis 6) an einem Teilbereich (25) des einen (15) der die Ringform des Tragbereiches (11) des Federanschlußelementes (1) schließenden Endabschnitte (14, 15) ausgeformt ist, insbesondere in überlappender Anordnung zu einem Teilbereich (24) des anderen Endabschnittes (14) und vorzugsweise unter Verbindung der beiden Teilbereiche (24, 25) mittels einer Durchdrückung (23) oder dergleichen Verbindungselement.

7. Zugfedereinrichtung nach einem der Ansprüche 1 bis 6,
**dadurch gekennzeichnet**,
daß jeder der Eingreifkörper (3 bis 7) mit beidseitig parallel zueinander und zur Zugrichtung der jeweils an ihnen gehaltenen Schraubenzugfedern (2) verlaufenden Seitenrändern (27) zwischen dem Tragbereich (11) und von den Seitenrändern (27) etwa senkrecht vorspringenden Halteschultern (26) der Vorsprünge (10) ausgebildet ist, wobei beide Seitenränder (27) geradlinig durchgehend oder der eine Seitenrand (27) durchgehend und der andere mit einer - insbesondere trapezförmigen - Aussparung (28) versehen ausgeformt sind.

8. Zugfedereinrichtung nach einem der Ansprüche 1 bis 7,
**dadurch gekennzeichnet**,
daß wenigstens ein Eingreifkörper (7) über einen bajonettartigen Anschluß lösbar mit dem Tragbereich (11) des Federanschlußelementes (1) dadurch verbunden ist, daß der Eingreifkörper (7) an seinem dem Eingriffsbereich in die Schraubenzugfeder (2) abgewandten Anschlußbereich einen Einhängeanker (32) aufweist, der aus einer etwa senkrecht zur Längserstreckung des Eingreifkörpers (7) in Federzugrichtung und aus dessen flächigem Verlauf etwa senkrecht ausgebogenen Abkröpfung (33) und an deren Endrandbereich (34) senkrecht zur Abkröpfrichtung und senkrecht zur Federzugrichtung zu entgegengesetzten Seiten abstrebend ausgebildeten Auslegern (35) besteht, mit welchen der Einhängeanker (32) in einer parallel zu den Flächen des Tragbereiches (11) bzw. dessen Ringabschnittes (12) und des Eingreifkörpers (7) verlaufenden Verschwenkebene eingenommenen, aus der Federzugrichtung abweichenden Verschwenklage in Richtung der Abkröpfung (33) bewegt in eine die Wandung des Tragbereiches (11) bzw. dessen Ringabschnittes (12) durchbrechend ausgebildete Einhängeöffnung (37) einsetzbar und in Federzugrichtung verlaufend verschwenkt mit den Auslegern (35) anschließende Randbereiche (41, 42) der Einhängeöffnung (37) hintergreifend in dieser gegen ein Ausgleiten gesichert gehalten ist, wozu die Einhängeöffnung (37) einen entsprechend schräg zur Ferderzugrichtung verlaufenden Einführschlitz (38) für die Durchführung der an der Abkröpfung (33) voneinander abstrebend ausgebildeten Ausleger (35) und einen in Federzugrichtung gesehen anschließenden schmaleren Öffnungsbereich (39) aufweist, in welchen ein im Bereich der Abkröpfung (33) zwischen deren Auslegern (35) und der angrenzenden Fläche (40) des Eingreifkörpers (7) vorgesehener Halsteil (36) der Abkröpfung (33) eingreift und sich an einem vorzugsweise senkrecht zur Federzugrichtung verlaufenden Randabschnitt (31) der Einhängeöffnung (37) unter der Kraft der angeschlossenen Schraubenzugfeder (2) abstützt.

9. Zugfedereinrichtung nach einem der Ansprüche 1 bis 8,
**dadurch gekennzeichnet**,
daß der zwischen den Vorsprüngen (10) eines jeden der Eingreifkörper (3 bis 7) und dem jeweils angrenzenden Übergang zu dem Tragbereich (11) - ausgehend von und unter Einschluß der an den Vorsprüngen (10) bzw. deren Halteschultern (26) abgestützten Schraubenfederwendel (9)- gelegene Wendelrestabschnitt (20), vorzugsweise aus mehreren Wendeln bestehend, einen durch mit radialer Druckkomponente durchgeführten Pressvorgang mit bleibender Verformung des Federdrahtes erzielten kleineren Wendeldurchmesser als der zur Mitte der Schraubenzugfeder (2) daran anschließende, unter Zugkraft auf Dehnung beanspruchte Wendelarbeitsabschnitt aufweist, vorzugsweise derart, daß der Innendurchmesser der Wendel des Wendelarbeitsabschnittes gleich dem oder größer als der senkrecht zur Federzugrichtung gemessene Abstand zwischen den äußeren Begrenzungen der beiden Vorsprünge (10) ist, die in Federzugrichtung bevorzugt um etwa eine halbe Wendelsteigung gegeneinander versetzt an dem jeweiligen Eingreifkörper (3 bis 7) ausgeformt sind, und/oder daß der Innendurchmesser der Wendel des Wendelrestabschnittes (20) um wenigstens den Durchmesser des Wendeldrahtes kleiner ist als der Innendurchmesser der Wendel des Wendelarbeitsabschnittes der Schraubenzugfeder (2).

10. Verfahren zur Herstellung einer Zugfedereinrichtung nach einem der Ansprüche 1 bis 9,
**dadurch gekennzeichnet**,
daß jede der an das Federanschlußelement (1) anzuschließenden Schraubenzugfedern (2) mit einem ihrer stirnseitigen Endbereiche (8) einen der an dem Tragbereich (11) vorgesehenen Eingreifkörper (3 bis 6) aufgeschoben wird, worauf der über dessen Vorsprünge (10) hinausgeschobene Wendelrestabschnitt (20 unter Einschluß von 9) des Endbereiches (8) unter einem mit radial zum Wendelverlauf gerichteter Kraftkomponente über die Biegegrenzbelastung des Wendeldrahtes hinausgehend erfolgenden Zusammenpressvorgang mit gegenüber dem zur Schraubenzugfederlängsmitte anschließenden Wendelverlauf der Schraubenzugfeder (2) geringerem Durchmesser bleibend verformt und damit gegen ein Abziehen von dem Eingreifkörper (3 bis 6) an dessen Vorsprüngen (10) bzw. deren Tragschultern (26) abgestützt gehalten wird.

## Claims

1. A tension spring device, more particularly as a weight balancing device for an overhead movable doorleaf, comprising a plurality of helical tension springs (2) to be secured in parallel arrangements, on either end, between connecting points to be acted upon by a tractive load, and at least one spring-connecting member (1), on which a plurality of engagement members (3 to 7) are provided projecting substantially in the longitudinal direction of the helical tension springs (2), each engagement member engaging, by means of its end face, in an end region (8) of a helical tension spring (2), and, by means of projections (10) formed at the edges substantially opposite one another, engaging behind a helical spring coil, positioned within said end region (8) so as to support said helical spring coil in the direction of traction, and on which engagement member there is a connecting projection (17), more particularly in the form of a suspension hook, to be secured in position to one of the connecting points, the spring- connecting member (1) including the preferably bent engagement members (3 to 6) and the connecting projection (17) being constructed from a flat sheet-metal part by bending, characterised in that the spring-connecting member (1) has a support region (11) constructed in the shape of an arc and/or polygon so as to be annularly closed, the end portions (14,15) of said support region adjoining the annular shape being combined so as to be arranged parallel to one another, at least in certain areas, and that the connecting projection (17 or 18,19) is formed within the region of parallel end portions (cross piece regions 21,22) and/or has two single projections (bends 18,19) spaced from each other in a single-layer part of the carrier region (11).

2. A tension spring device according to claim 1, characterised in that the support region (11) of the spring-connecting member (1) has, when viewed in the direction of the spring tension, the cross-sectional shape of a circle, square, rectangle, triangle or other polygon, more particular a trapezium (12), which also has curved corner transitory regions or combined curved and straight portions.

3. A tension spring device according to either claim 1 or 2, characterised in that the support region (11) of the spring-connecting member (1) has a closed annular portion (12) and a collar portion (13) adjoining said annular portion and being formed so as to project in the opposite direction to the engagement members (3 to 7), at least one section (crosspiece regions 21,22) of the combined parallel end portions (14,15) being arranged in said collar portion, said section preferably extending to the end region of the collar portion (13) positioned opposite the engagement members (3 to 7) and, in particular there, comprising the double-layered connecting projection (17).

4. A tension spring device according to any one of claims 1 to 3, characterised in that the support region (11) of the spring-connecting member (1) has a closed annular portion (12) and a collar portion (13) adjoining said annular portion and being constructed so as to project in the opposite direction of the engagement members (3 to 7), a suspension bend (18 or 19) being provided in the two side regions of said collar portion (13) which extend, preferably, substantially parallel to the direction of the spring traction, more particularly in the end regions of said side regions remote from the engagement members (3 to 7), said bends (18,19) being arranged and/or formed at a spacing from one another substantially in mirror symmetry relative to a plane provided by the resultant spring load axis of the helical tension springs (2).

5. A tension spring device according to any one of claims 1 to 4, characterised in that the connecting projection (17) provided within the region of the combined parallel crosspieces (21,22) of the end portions (14,15), more particularly in the shape of a suspension hook, is arranged, in respect of its engagement, on a connecting point to be received, in or near the resultant tension spring load axis of the helical tension springs (2).

6. A tension spring device according to any one of claims 1 to 5, characterised in that one (6) of the engagement members (3 to 6) is formed on a section (25) of one (15) of the end portions (14,15) closing the annular shape of the support region (11) of the spring-connecting member (1), more particularly in an overlapping arrangement, with respect to a section (24) of the other end portion (14) and, preferably, by connecting the two sections (24,25) by means of an indentation (23) or similar connecting member.

7. A tension spring device according to any one of claims 1 to 6, characterised that each of the engagement members (3 to 7) is formed, on either side, with side edges (27), extending parallel to each other and in the direction of traction of each helical tension spring (2) held thereon, between the support region (11) and the retaining shoulders (26) of the projections (10), projecting substantially at right angles, both side edges (27) being formed in a straight line or one of the side edges (27) being straight and the other having a recess (28), more particularly in the form of a trapezium.

8. A tension spring device according to any one of claims 1 to 7, characterized in that at least one engagement member (7) is detachably connected with the support region (11) of the spring-connecting member (1), via a bayonet-like connection, so that the engagement member (7) has an attachment anchor (32) in the connecting region remote from the region of engagement in the helical tension spring (2), said attachment anchor comprising a bend (33) deflected substantially at right angles to the longitudinal extent of the engagement member (7) in the direction of the spring tension and substantially at right angles from the planar path of said engagement member, and comprising arms (35) provided on the end edge region (34) of said bend which project, on opposite sides, at right angles to the direction of bend and at right angles to the direction of spring tension, by means of which the attachment anchor (32) having been moved, in a pivotal plane extending parallel to the faces of the support region (11) or the annular portion (12) thereof and of the engagement member (7), from the pivotal position different from the direction of spring tension into the direction of bend (33), may be inserted into an attachment opening (37) penetrating the wall of the support region (11) or the annular portion (12) thereof and, while being displaced in the direction of spring tension and engaging with the arms (35) behind adjoining edge regions (41,42) of the attachment opening (37), may be reliably held against a sliding out, for this purpose the attachment opening (37) having an insertion slot, (38) which extends at a corresponding angle relative to the direction of spring tension, for the insertion of the arms (35) formed on the bend (33) so as to project in opposite directions, and having an adjoining smaller opening region (39) when viewed in the direction of spring tension, into which opening region a collar part (36) of the bend (33), provided within the region of the bend (33) between the arms (35) thereof and the adjoining face (40) of the engagement member (7), engages and rests, under the force of the adjoining helical tension spring (2), against the edge portion (31) of the attachment opening (37) extending preferably at right angles to the direction of spring tension.

9. A tension spring device according to any one of claims 1 to 8, characterised in that the remaining coil portion (20) preferably comprising a plurality of coils and positioned between the projections (10) of each engagement member (3 to 7) and the relevant adjoining transitory area to the carrier region (11), proceeding from and including the helical tension coil (9), bearing against the projections (10) or the retaining shoulders (26) thereof, has a coil diameter which, due to a compression process effected by a radial pressure component resulting in a permanent deformation of a spring wire, is smaller than the adjoining operating coil portion strained under tension force, preferably such that the inside diameter of the coil of the operating coil portion is equal to or larger than the spacing, measured at right angles to the direction of the spring tension, between the outer boundaries of the two projections (10) formed on the respective engagement member (3 to 7) so as to be offset in the direction of spring tension by the amount of half a coil pitch and/or that the coil inside diameter of the remaining coil portion (20) is smaller than the coil inside diameter of the operating coil portion of the helical tension spring (2), by at least the diameter of the coil wire.

10. A process for preparing a tension spring device according to any one of claims 1 to 9, characterised in that each of the helical tension springs (2) to be connected to the spring-connecting member (1) is pushed, by means of its end face region (8) onto one of the engagement members (3 to 6) provided on the support region, whereupon the remaining coil portion (20) including (9) of the end region (8), pushed beyond the projections (10) of said engagement member, becomes permanently deformed under a compression process by means of a force component oriented radially to the path of the coil, exceeding the bending limit load of the coil wire, resulting in a smaller diameter compared with the coil path of the helical tension spring (2) adjoining the longitudinal centre of said spring, thus being supportingly held on the projections (10) or against the retaining shoulders (26) of the engagement member (3 to 6) against removal therefrom.

## Revendications

1. Dispositif de connexion de ressort, notamment comme dispositif compensateur de poids d'un panneau de porte relevable avec plusieurs ressorts hélicoïdaux de traction (2), qui sont fixés en parallèle entre des postes de fixation à placer sous contrainte de charge et avec au moins un élément de connexion de ressort (1) sur lequel on prévoit dans le sens longitudinal des ressorts hélicoïdaux de traction (2) plusieurs corps de prise (3 à 7) sur lesquels vient en prise frontalement une zone terminale (8) d'un ressort hélicoïdal de traction (2) et une spire (9) du ressort hélicoïdal placée à l'intérieur de cette zone terminale (8) vient en prise en appui dans le sens de traction sur des épaulements en saillie (10) opposés, et sur lequel est formée une connexion (17) à placer à l'un des postes de fixation, notamment sous la forme d'un crochet de suspension, l'élément de connexion de ressort (1) étant formé avec les corps de prise (3 à 6) coudés et la connexion (17) par pliage à partir d'une pièce en tôle plane, caractérisé en ce que l'élément de connexion de ressort (1) présente une zone porteur (11) refermée sur elle-même annulaire de forme incurvée et/ou polygonale vu en direction du ressort de traction, dont les zones terminales (14, 15) se réunissant pour donner la forme annulaire (12) s'assemblent parallèlement au moins partiellement, et que la connexion (17 ou 18, 19) est formée dans la zone des parties terminales à couches parallèles (zone des entretoises 21, 22) et/ou présente deux formations à une couche de la zone porteur (11) espacées les unes des autres (coude 18, 19).

2. Dispositif à ressort de traction selon la revendication 1, caractérisé en ce que la zone porteur (11) de l'élément de connexion de ressort (1) vue dans le sens du ressort de traction a une section circulaire, carrée, rectangulaire, triangulaire ou autre forme polygonale, notamment trapézoïdale (12) avec aussi des transitions d'angle incurvées ou elle présente à la fois des parties droites et des parties incurvées intercalées.

3. Dispositif de ressort de traction selon la revendication 1 ou 2, caractérisé en ce que la zone porteur (11) de l'élément de connexion de ressort (1) présente une partie annulaire (12) refermée sur elle-même et une partie de col (13) qui s'en détache en sens opposé aux corps de prise (3 à 7) dans laquelle est disposée au moins une partie (domaine des entretoises 21, 22) des parties terminales (14, 15) réunies parallèlement, qui s'étend de préférence jusqu'au domaine terminal de la partie de col (13) opposée au corps de prise (3 à 7) et, notamment, là où la connexion (17) est en double couche.

4. Dispositif de ressort de traction selon l'une des revendications 1 à 3, caractérisé en ce que la zone porteur (11) de l'élément de connexion de ressort (1) présente une partie annulaire (12) refermée sur elle-même et une partie de col (13) qui s'en détache à l'opposé des corps de prise (3 à 7), dans lequel on prévoit de préférence s'étendant parallèlement par rapport à la direction du ressort de traction deux zones latérales, en particulier dans leurs parties terminales opposées aux corps de prise (3 à 7), dans chaque cas un coude de suspension (18 ou 19), ces coudes (18, 19) sont disposés et/ou formés symétriquement par rapport à un plan, passant par l'axe de charge des ressorts hélicoïdaux de traction (2), espacés les uns des autres.

5. Dispositif de traction selon l'une des revendications 2 à 4, caractérisé en ce que la connexion (17) est disposée dans la zone des parties terminales (14, 15) (zone des entretoises 21, 22) réunies en couches parallèles, notamment en forme de crochet de suspension, du point de vue de sa prise dans un poste de connexion de réception dans ou à proximité de l'axe de charge de traction du ressort hélicoïdal de traction (2).

6. Dispositif de ressort de traction selon l'une des revendications 1 à 5, caractérisé en ce que l'un (6) des corps de prise (3 à 6) est formé sur une zone partielle (25) de l'une (15) des parties terminales (14, 15) fermant la forme annulaire de la zone porteur (11) de l'élément de connexion de ressort (1), notamment en recouvrement dans une zone partielle (24) de l'autre partie terminale (14) et de préférence en reliant les deux zones partielles (24, 25) au moyen d'un sertissage (23) ou élément de fixation analogue.

7. Dispositif de ressort de traction selon l'une des revendications 1 à 6, caractérisé en ce que chaque corps de prise (3 à 7) est constitué de deux bords latéraux (27) s'étendant parallèlement entre eux et au sens de traction des ressorts hélicoïdaux (2) de traction qui leur sont fixés entre la zone porteur (11) et les épaulements (26) des saillies (10) se détachant approximativement perpendiculairement des bords latéraux (27), les deux bords latéraux (27) étant linéaires en continu, ou l'un des bords latéraux (27) est continu et l'autre est muni d'un évidement (28) trapézoïdale notamment.

8. Dispositif de ressort de traction selon l'une des revendications 1 à 7, caractérisé en ce qu'au moins un corps de prise (7) est relié de manière amovible à la zone porteur (11) de l'élément de connexion de ressort (1), en ce que le corps de prise (7) un crochet de suspension (32) dans sa zone de connexion opposée à la zone de prise dans le ressort hélicoïdal de traction (2), qui est constitué d'un coude (33) incurvé approximativement perpendiculairement à l'extension longitudinale du corps de prise (7) en direction du ressort de traction et perpendiculairement approximativement et de son tracé superficiel et des consoles (35) (avant-bras) sont formées en s'écartant de sa zone terminale (34) perpendiculairement par rapport à la direction du coude et perpendiculairement à la direction du ressort de traction par rapport aux côtés opposés, avec lesquelles le crochet de suspension (32) se déplace dans un plan de pivotement s'étendant parallèlement à la surface de la zone porteur (11) ou à sa partie annulaire (12) et du corps de prise (7) insérable depuis la direction du ressort de traction vers le coude (33) dans un orifice de suspension (37) formé par pénétration dans la paroi de la zone porteur (11) ou sa partie annulaire (12), et il pivote dans la direction du ressort de traction avec les zones de bord (41, 42) contiguës aux consoles (35) (avant-bras) en venant en prise dans l'orifice de suspension (37) en y étant maintenu en sécurité contre un glissement, pour cela l'orifice de suspension (37) présente une fente d'insertion (38) s'étendant en biais par rapport à la direction du ressort de traction pour permettre l'insertion des consoles (35) (avant-bras) qui s'écartent l'une de l'autre du coude (33), et il présente un orifice (39) plus étroit se raccordant en direction du ressort, dans lequel vient en prise une pièce du col (36) du coude (33) prévue dans la zone du coude (33) entre ses consoles (35) (avant-bras) et la surface contiguë (40) du corps de prise (7), et il s'appuie sur une partie de bord (31) de l'orifice de suspension (37) s'étendant de préférence perpendiculairement à la direction du ressort sous l'effet de la force du ressort hélicoïdal (2).

9. Dispositif de ressort de traction selon l'une des revendications 1 à 8, caractérisé en ce que la partie restante d'hélice (20) placée entre les épaulements en saillie (10) de chacun d'un des corps de prise (3 à 7) et le passage contigu vers la zone porteur (11), en partant de et sous le raccordement des spires de ressort hélicoïdal (9) appuyées sur les épaulements en saillie (10) et leurs épaulements de maintien (26), constituée de préférence de plusieurs spires, présente un diamètre de spire plus étroit obtenu par déformation permanente du fil de ressort dûe à un processus de compression réalisé avec composante radiale de pression, diamètre plus petit que celui de la partie d'hélice contiguë qui travaille soumise sous l'effet de la traction à l'allongement vers le milieu du ressort hélicoïdal de traction (2), de sorte que le diamètre intérieur d'hélice de la partie d'hélice qui travaille est identique ou supérieur à l'intervalle mesuré perpendiculairement à la direction du ressort de traction entre les limites externes des deux saillies (10), qui sont formées sur chaque corps de prise (3 à 7) avec un décalage préféré d'environ un demi pas d'hélice dans le sens du ressort et/ou le diamètre intérieur de l'hélice de la partie d'hélice restante (20) est plus petit d'au moins le diamètre du fil d'hélice que le diamètre intérieur de l'hélice de la partie d'hélice du ressort hélicoïdal de traction (2) qui travaille.

10. Procédé de fabrication d'un dispositif de ressort de traction selon l'une des revendications 1 à 9, caractérisé en ce que chacun des ressorts hélicoïdaux de traction (2) à fixer sur l'élément de connexion de ressort (1) est inséré par une de ses zones terminales (8) frontales sur l'un des corps de prise (3 à 6) prévu sur la zone porteur (11), ce qui déforme avec un diamètre rémanent plus petit la partie restante d'hélice insérée sur ses épaulements en saillie (10), (20 y compris 9) de la zone terminale (8), sous l'effet d'un processus de compression réalisé jusqu'à la limite de contrainte de flexion du fil d'hélice avec une composante de force dirigée radialement par rapport au tracé de l'hélice, par rapport à celui de la portion d'hélice contiguë de ressort hélicoïdal de traction (2) au milieu de la longueur du ressort hélicoïdal de traction et ainsi il est garanti contre un accrochage du corps de prise (3 à 6) depuis les épaulements en saillie (10) ou les épaulements de soutien (26).
